# EUROPEAN PATENT APPLICATION

(11) **EP 1 914 485 A1**
(43) Date of publication of application: **23.04.2008**
(21) Application number: 06767158.6
(22) Date of filing: 22.06.2006
(51) Int. Cl.: F24H 1/00, F24H 1/18, F25B 1/00, F25B 5/02, F25B 5/04, F25B 29/00, F25B 30/02, F25B 47/02

(54) **HOTWATER SUPPLY DEVICE**

(30) Priority: 29.06.2005 JP 2005190461
(71) Applicant: DAIKIN INDUSTRIES, LTD., Osaka-shi, Osaka 530-8323 (JP)
(72) Inventor: NAKAYAMA, Hiroshi c/o Kanaoka Factory, Sakai, cho, Kit a-ku, Sakai-shi, Osaka;5918511 (JP)
(74) Representative: Goddar, Heinz J.
(86) International application number: PCT/JP2006/312500
(87) International publication number: WO 2007/000931

(57) **Abstract**

A hot water supply device **(1)** includes a hot water storage tank **(11)** and a refrigerant circuit **(20)** of a vapor compression refrigeration cycle including a radiator **(21),** an evaporator **(22),** and an auxiliary evaporator **(23).** High-temperature water is retained in the hot water storage tank **(11)** in such a manner that storage water taken out from the lower part of the hot water storage tank **(11)** is heated in the radiator **(21)** to be high-temperature water and is then returned to the upper part of the hot water storage tank **(11).** A cooling circuit **(15)** is connected to the lower part of the hot water storage tank **(11)** so that the storage water in the lower part of the hot water storage tank **(11)** is cooled in the auxiliary evaporator **(23)** of the refrigerant circuit **(20)** and is then returned to the lower part of the hot water storage tank **(11).**

## Description

### Technical Field

The present invention relates to hot water supply devices and more particularly to a hot water supply device including a refrigerant circuit of a vapor compression refrigeration cycle and a hot water storage tank.

### Background Art

Hot water supply devices including a refrigerant circuit of a vapor compression refrigeration cycle and a hot water storage tank have been known conventionally. The hot water supply devices heat storage water taken out from the lower part of the hot water storage tank with the use of a radiator of the refrigerant circuit to obtain high-temperature water and return the high-temperature water to the upper part of the hot water storage tank. The hot water supply devices accumulate heat in the hot water storage tank and supply the heat to the user side in the form of hot water, a heater, or the like.

From the upper part to the lower part in the hot water storage tank, a high-temperature water layer, a middle-temperature water layer, and a low-temperature water layer are formed due to difference in water density caused by temperature difference of the storage water. When low-temperature water of the low-temperature water layer is taken out from the lower part of the hot water storage tank, the low-temperature water flows into the radiator of the refrigerant circuit, of which outlet becomes low temperature, so that the COP of the refrigerant circuit is secured at the predetermined value. In some case, however, the middle-temperature water in the hot water storage tank may be taken out. In this case, the temperature of the outlet of the radiator increases to lower the COP of the refrigerant circuit. It is known that in the case where carbon dioxide is used as the refrigerant, lowering of the COP due to flowing of the middle-temperature water into the radiator is great when compared with the case using another refrigerant, such as fluorocarbon refrigerant.

In view of the foregoing, a hot water supply device has been examined in which the middle-temperature water is prevented from flowing into the radiator of the refrigerant circuit to permit the low-temperature water to flow thereinto definitely for preventing the COP of the refrigerant circuit from lowing (see, for example, Patent Document 1). This hot water supply device includes a water flow passage which takes out the middle-temperature water from the middle part of the hot water storage tank and returns to the hot water storage tank the middle-temperature water as low-temperature water heat exchanged with outdoor air under environment where the outdoor air is low temperature, such as in a cold district. This reduces the middle-temperature water in the hot water storage tank to permit the low-temperature water to flow into the radiator of the refrigerant circuit, thereby preventing the COP of the refrigerant circuit from lowering.
Patent Document 1: Japanese Patent Application Laid Open Publication No. 2005-69608

### Summary of the Invention

### Problems that the Invention is to Solve

The hot water supply device of Patent Document 1, however, cools the middle-temperature water with the use of the outdoor air, and accordingly, the middle-temperature water may be cooled insufficiently when the outdoor air temperature is high. Further, when the outdoor air temperature is too low, the middle-temperature water may be excessively cooled to be frozen. In other words, in the hot water supply device of Patent Document 1, the outdoor ait temperature directly influences the cooling process of the middle-temperature water in the hot water storage tank to invite inappropriate middle-temperature water cooling in some cases.

The present invention has been made in view of the foregoing and has its object of preventing the COP of a refrigerant circuit from lowering by performing appropriate cooling on storage water in a water storage tank with influence of the outdoor air temperature eliminated.

### Means for Solving the Problems

A first aspect of the present invention is directed to a hot water supply device including: a refrigerant circuit **(20)** of a vapor compression refrigeration cycle including a radiator **(21)** and an evaporator **(22);** and a hot water storage tank **(11)** for storing high-temperature water heated in the radiator **(21),** the hot water storage tank **(11)** including a lower part connected to the radiator **(21)** through an extraction pipe **(13)** and an upper part connected to the radiator **(21)** through a return pipe **(14),** the hot water supply device supplying heat accumulated in the hot water storage tank **(11)** to a user side. Wherein, it further includes: an auxiliary evaporator **(23)** provided in the refrigerant circuit **(20);** and a cooling circuit **(15)** connected to the lower part of the hot water storage tank **(11)** for allowing storage water in the lower part of the hot water storage tank **(11)** to be cooled in the auxiliary evaporator **(23)** and returning it to the lower part of the hot water storage tank **(11).**

In the first aspect, in the refrigerant circuit **(15),** the storage water taken out from the lower part of the hot water storage tank **(11)** is cooled in the auxiliary evaporator **(23)** and is then returned to the lower part of the hot water storage tank **(11).** As a result, the low-temperature storage water including the thus cooled storage water flows into the radiator **(21)** through the extraction pipe **(13).**

A second aspect of the present invention is directed to a hot water supply device including: a refrigerant circuit **(20)** of a vapor compression refrigeration cycle including a radiator **(21)** and an evaporator **(22);** a hot water storage tank **(11)** for storing high-temperature water heated in the radiator **(21),** the hot water storage tank **(11)** including a lower part connected to the radiator **(21)** through an extraction pipe **(13)** and an upper part connected to the radiator **(21)** through a return pipe **(14),** the hot water supply device supplying heat accumulated in the hot water storage tank **(11)** to a user side. Wherein, it further includes: an auxiliary evaporator **(23)** provided in the refrigerant circuit **(20)** for cooling storage water flowing into the extraction pipe **(13)** from the hot water storage tank **(11).**

In the second aspect, the storage water in the lower part of the hot water storage tank **(11)** is taken out into the extraction pipe **(13)** and is then cooled in the auxiliary evaporator **(23).** Hence, the cooled storage water flows into the radiator **(21).**

Referring to a third aspect of the present invention, in the first aspect, the auxiliary evaporator **(23)** is connected in series to the evaporator **(22)** and is arranged downstream of the evaporator **(22).**

In an eighth aspect of the present invention, in the second aspect, the auxiliary evaporator **(23)** is connected in series to the evaporator **(22)** and is arranged downstream of the evaporator **(22).**

In the third aspect and the eighth aspect, in the refrigerant circuit **(20),** the storage water is cooled in the auxiliary evaporator **(23)** by the refrigerant flowing in the evaporator **(22).**

Referring to a fourth aspect of the present invention, in the third aspect, the refrigerant circuit **(20)** includes: a bypass circuit **(28)** connected to an upstream side and a downstream side of the auxiliary evaporator **(23);** and switching means **(51)** for switching the refrigerant circuit **(20)** so as to allow all refrigerant flowing out from the evaporator **(22)** to flow into the bypass circuit **(28)** according to the temperature of the refrigerant flowing out from the evaporator **(22).**

Referring to a fourth aspect of the present invention, in the third aspect, the refrigerant circuit **(20)** includes: a bypass circuit **(28)** connected to an upstream side and a downstream side of the auxiliary evaporator **(23);** and switching means **(51)** for switching the refrigerant circuit **(20)** so as to allow all refrigerant flowing out from the evaporator **(22)** to flow into the bypass circuit **(28)** according to the temperature of the refrigerant flowing out from the evaporator **(22).**

Referring to a ninth aspect of the present invention, in the eighth aspect, the refrigerant circuit **(20)** includes: a bypass circuit **(28)** connected to an upstream side and a downstream side of the auxiliary evaporator **(23);** and switching means **(51)** for switching the refrigerant circuit **(20)** so as to allow all refrigerant flowing out from the evaporator **(22)** to flow into the bypass circuit **(28)** according to the temperature of the refrigerant flowing out from the evaporator **(22).**

In the fourth aspect and the ninth aspect, when the refrigerant having flown in the evaporator **(22)** is at a temperature equal to or lower than a predetermined temperature, all the refrigerant flowing out from the evaporator flows into the bypass circuit **(28)** to thus prevent the storage water from being frozen in the auxiliary evaporator **(23).**

Referring to a fifth aspect of the present invention, in the first aspect, the auxiliary evaporator **(23)** is connected in parallel to the evaporator **(22).**

Referring to a tenth aspect of the present invention, in the second aspect, the auxiliary evaporator **(23)** is connected in parallel to the evaporator **(22).**

In the fifth aspect and the tenth aspect, part of the refrigerant having flown in the radiator **(21)** flows into the auxiliary evaporator **(12)** to thus cool the storage water definitely.

Referring to a sixth aspect of the present invention, the hot water supply device of the first aspect further includes: defrosting operation means **(52)** for defrosting the evaporator **(22)** with the use of heat of the storage water obtained in the auxiliary evaporator **(23).**

Referring to an eleventh aspect of the present invention, the hot water supply device of the second aspect further includes defrosting operation means **(52)** for defrosting the evaporator **(22)** with the use of heat of the storage water obtained in the auxiliary evaporator **(23).**

In the sixth aspect and the eleventh aspect, when frost adheres to the evaporator **(22),** the defrosting operation means **(52)** performs a defrosting operation for defrosting the evaporator **(23)** with the use of the heat of the storage water obtained in the auxiliary evaporator **(23).**

A thirteenth aspect of the present invention is directed to a hot water supply device including: a refrigerant circuit **(20)** of a vapor compression refrigeration cycle including a radiator **(21)** and an evaporator **(22);** a hot water storage tank **(11)** for storing high-temperature water heated in the radiator **(21),** the hot water storage tank **(11)** including a lower part connected to the radiator **(21)** through an extraction pipe **(13)** and an upper part connected to the radiator **(21)** through a return pipe **(14);** and a user side circuit **(39)** including: a primary side circuit **(32)** connected to the upper part and the lower part of the hot water storage tank **(11);** an intermediate heat exchanger **(33)** connected to the primary side circuit **(32);** and a secondary side circuit **(34)** which is connected to the intermediate heat exchanger **(33),** in which a heating medium circulates, and which supplies the heating medium heat exchanged with the high-temperature water of the hot water storage tank to a user side. Wherein the secondary side circuit **(34)** of the user side circuit **(39)** includes cooling means **(40)** provided upstream of the intermediate heat exchanger **(33)** for cooling the heating medium.

In the thirteenth aspect, in the primary side circuit **(32),** the high-temperature water taken out from the upper part of the hot water storage tank **(11)** is cooled by the heating medium cooled in the cooling means **(40)** of the secondary side circuit **(34)** and is returned to the lower part of the hot water storage tank **(11).** As a result, the low-temperature storage water including the thus cooled storage water is allowed to flow into the radiator **(21)** through the extraction pipe **(13).**

Referring to a fourteenth aspect of the present invention, in the thirteenth aspect, the cooling means **(40)** is a ventilation heat exchanger **(40)** for heating outdoor air (OA) supplied indoors.

In the fourteenth aspect, in the ventilation heat exchanger **(40),** the heating medium flowing in the secondary side circuit **(34)** is cooled by the outdoor air (OA) while the outdoor air (OA) supplied indoors is heated by the heating medium flowing in the secondary side circuit **(34).**

Referring to a seventh aspect of the present invention, in the first aspect, the refrigerant of the refrigerant circuit **(20)** is carbon dioxide. Referring to a twelfth aspect of the present invention, in the second aspect, the refrigerant of the refrigerant circuit **(20)** is carbon dioxide. Further referring to a fifteenth aspect of the present invention, in the thirteenth aspect, the refrigerant of the refrigerant circuit **(20)** is carbon dioxide.

In the seventh aspect, the twelfth aspect, and the fifteenth aspect, in the refrigerant circuit **(20)** in which carbon dioxide is filled as the refrigerant, the storage water in the first, second, and thirteenth aspects is cooled so that the low-temperature storage water is supplied to the radiator **(21)** of the refrigerant circuit **(20).**

### Effects of the Invention

In the first aspect of the present invention, in the refrigerant circuit **(15),** the storage water in the lower part of the hot water storage tank **(11)** is taken out, is cooled in the auxiliary evaporator **(23),** and is then returned to the lower part of the hot water storage tank **(11).** Accordingly, the low-temperature storage water including the thus cooled storage water can be supplied to the radiator **(21)** of the refrigerant circuit **(20)** through the extraction pipe **(13).** Accordingly, the refrigerant is heat exchanged with the low-temperature storage water to be cooled in the radiator **(21)** sufficiently, thereby preventing the COP of the refrigerant circuit **(20)** from lowering.

In the second aspect of the present invention, the storage water in the lower part of the hot water storage tank **(11)** is taken out to the extraction pipe **(13)** and is cooled in the auxiliary evaporator **(23).** The thus cooled low-temperature storage water can be supplied to the radiator **(21)** of the refrigerant circuit **(20).** Accordingly, the refrigerant is heat exchanged with the low-temperature storage water to be cooled in the radiator **(21)** sufficiently, thereby preventing the COP of the refrigerant circuit **(20)** from lowering.

In the third aspect and the eighth aspect of the present invention, the auxiliary evaporator **(23)** is connected in series to the downstream side of the evaporator **(22),** so that the refrigerant can be evaporated with the use of the heat of the storage water in the auxiliary evaporator **(23)** after being evaporated in the evaporator **(22).** This increases the evaporation power in the evaporation process of the refrigerant circuit **(20)** and attains size reduction of the evaporator **(22).**

In the fourth aspect and the ninth aspect of present invention, the bypass circuit **(28)** and the switching means **(51)** for switching the refrigerant circuit **(20)** is provided in the refrigerant circuit **(20)** so as to allow all the refrigerant flowing out from the evaporator **(22)** to flow into the bypass circuit **(28)** according to the temperature of the refrigerant flowing our from the evaporator **(22).** Accordingly, when the temperature of the refrigerant flowing out from evaporator **(22)** is equal to or lower than the predetermined temperature, all of the refrigerant flowing out from the evaporator **(22)** is allowed to flow into the bypass circuit **(28)** to prevent the refrigerant at a temperature equal to or lower than the predetermined temperature from flowing into the auxiliary evaporator **(23).** This prevents the storage water cooled by the refrigerant from being excessively cooled and being frozen in the auxiliary evaporator **(23).**

In the fifth aspect and the tenth aspect of present invention, the evaporator **(22)** and the auxiliary evaporator **(23)** are connected in parallel to each other to prevent the refrigerant having flown in the evaporator **(22)** to flow into the auxiliary evaporator **(23).** Accordingly, the auxiliary evaporator **(23)** can cool the storage water flowing in the extraction pipe **(13)** or the cooling circuit **(15)** all the time without receiving influence of the temperature of the refrigerant flowing out from the evaporator **(22).**

In the sixth aspect and the eleventh aspect of present invention, the defrosting operation means **(52)** for defrosting the evaporator **(22)** with the use of the heat of the storage water obtained in the auxiliary evaporator **(23)** is provided, which attains the defrosting operation for defrosting the evaporator **(23)** with the need to provide additional heat source mans for supplying heat for the defrosting operation eliminated.

In the thirteenth aspect of present invention, the cooling means **(40)** is provided upstream of the intermediate heat exchanger **(33)** of the secondary side circuit **(34)** to cool the heating medium flowing in the secondary side circuit **(34)** definitely. Accordingly, in the primary side circuit **(32),** the high-temperature water taken out from the upper part of the hot water storage tank **(11)** is allowed to be the low-temperature storage water by heat exchange with the thus cooled heating medium and is then returned to the lower part of the hot water storage tank **(11),** so that the low-temperature water is retained in the lower part of the hot water storage tank **(11).** As a result, the low-temperature storage water can be supplied to the radiator **(21)** of the refrigerant circuit **(20)** to prevent the COP of the refrigerant circuit **(20)** from lowering.

In the fourteenth aspect of present invention, the cooling means **(40)** serves as the ventilation heat exchanger **(40)** for heating the outdoor air (OA) supplied indoors, so that the outdoor air (OA) supplied indoors can be heated by the heating medium flowing in the secondary side circuit **(34)** while the heating medium can be cooled by the outdoor air (OA) in the ventilation heat exchanger **(40).** Further, there is no need to provide an additional ventilation heat exchanger **(40)** to attain cost reduction.

In the seventh aspect, the twelfth aspect, and the fifteenth aspect of present invention, carbon dioxide is used as the refrigerant of the refrigerant circuit **(20).** Carbon dioxide, which is cooled insufficiently in the radiator **(21),** lowers the COP greatly when compared with other refrigerant, exhibiting remarkable effect of prevention of COP lowering.

### Brief Description of the Drawings

[FIG. **1**] FIG. **1** is a schematic constitutional diagram of a hot water supply device in accordance with Embodiment 1.
[FIG. **2**] FIG. **2** is a Mollier diagram (pressure/enthalpy diagram) of a vapor compression refrigeration cycle in a refrigerant circuit using carbon dioxide as refrigerant.
[FIG. **3**] FIG. **3** is a Mollier diagram (pressure/enthalpy diagram) of a vapor compression refrigeration cycle in a refrigerant circuit using R410A as refrigerant.
[FIG. **4**] FIG. **4** is a schematic constitutional diagram of a hot water supply device in accordance with Modified Example of Embodiment 1.
[FIG. **5**] FIG. **5** is a schematic constitutional diagram of a hot water supply device in accordance with Embodiment 2.
[FGI. **6**] FIG. **6** is a schematic constitutional diagram of a hot water supply device in accordance with Embodiment 3.

### Explanation of Reference Numerals

- **1**: hot water supply device
- **11**: hot water storage tank
- **13**: extraction pipe
- **14**: return pipe
- **20**: refrigerant circuit
- **21**: radiator
- **22**: evaporator
- **23**: auxiliary evaporator
- **28**: bypass circuit
- **32**: hot water circuit (primary side circuit)
- **33**: intermediate heat exchanger
- **34**: circulation water circuit (secondary side circuit)
- **39**: user side circuit
- **40**: ventilation heat exchanger (cooling means)
- **51**: flow path switching section (switching means)
- **52**: defrosting operation section (defrosting operation means)

### Best Mode for Carrying out the Invention

Embodiments of the present invention will be described in detail with reference to the accompanying drawings.

### <Embodiment 1>

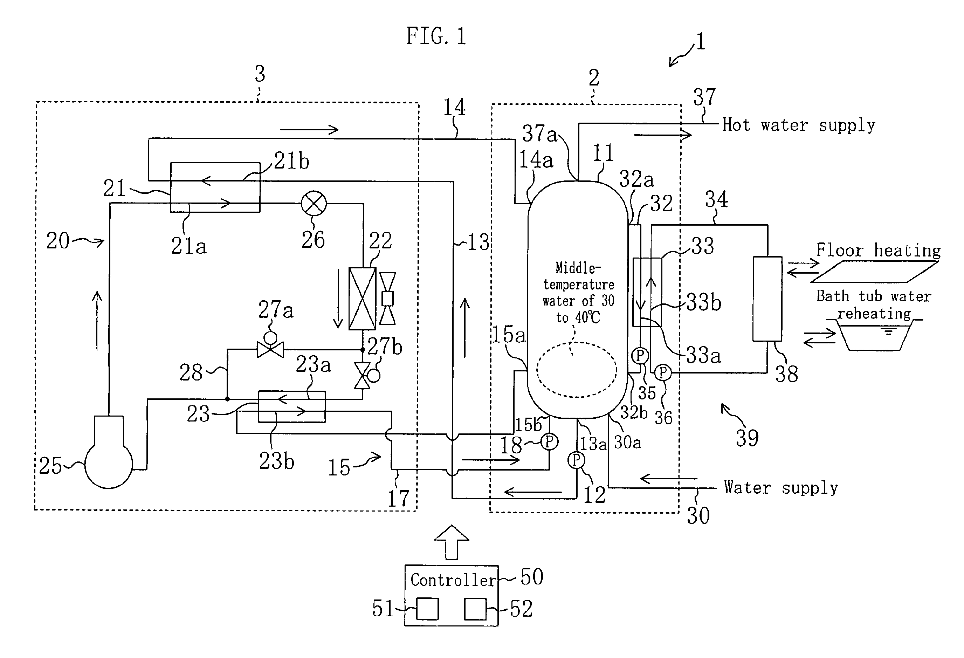

As shown in FIG. **1****,** a hot water supply device **(1)** in accordance with present embodiment is composed of a heat source unit **(3)** and a hot water storage unit **(2).** The hot water supply device **(1)** includes a refrigerant circuit **(20),** a hot water storage tank **(11),** a user side circuit **(39),** and a controller **(50).**

The refrigerant circuit **(20)** is accommodated in the heat source unit **(3).** The refrigerant circuit **(20)** includes a compressor **(25),** a radiator **(21),** a motor-operated expansion valve **(26),** an evaporator **(22),** a solenoid valve **(27b),** and an auxiliary evaporator **(32),** which are connected in series in this order to form a closed circuit. Carbon dioxide is filled in the refrigerant circuit **(20)** as refrigerant.

The radiator **(21)** is a generally-called plate type heat exchanger and includes a plurality of first flow paths **(21a)** and a plurality of second flow paths **(21b)** partitioned from each other. The evaporator **(22)** is a generally-called a fin and tube heat exchanger.

The discharge side of the compressor **(25)** is connected to one end of each first flow path **(21a)** of the radiator **(21).** The other end of each first flow path **(21a)** of the radiator **(21)** is connected to one end of the evaporator **(22)** via the motor-operated expansion valve **(26).** The other end of the evaporator **(22)** is connected to the suction side of the compressor **(25)** via the solenoid valve **(27a)** and the auxiliary evaporator **(23).**

The hot water storage tank **(11)** is in a substantially cylindrical form to which an extraction pipe **(13),** a return pipe **(14),** a water supply pipe **(30),** a hot water supply pipe **(37),** and a hot water circuit **(32)** of the user side circuit **(39)** are connected.

Each of the extraction pipe **(13)** and the return pipe **(14)** is provided astride the heat source unit **(3)** and the hot water storage unit **(2).** The hot water storage tank **(11)** includes an extraction port **(13a)** and a return port **(14a).** The extraction port **(13a)** is formed at the bottom of the hot water storage tank **(11)** while the return port **(14a)** is formed at the upper part of the side face of the hot water storage tank **(11).** The extraction port **(13a)** is connected to one end of the extraction pipe **(13),** and the other end of the extraction pipe **(13)** is connected to one end of each second flow path **(21b)** of the radiator **(21).** In the extraction pipe **(13),** a pump **(12)** is provided in the vicinity of the extraction port **(13a)** of the hot water storage tank **(11).** On the other hand, the return port **(14a)** is connected to one end of the return pipe **(14),** and the other end of the return pipe **(14)** is connected to the other end of each second flow path **(21b)** of the radiator **(21).**

The hot water storage tank **(11)** includes a water supply inlet **(30a)** and a hot water supply outlet **(37a).** The water supply inlet (30a) is formed at the bottom of the hot water storage tank **(11)** while the hot water supply outlet **(37a)** is formed at the top thereof. The water supply pipe **(30)** is connected to the water supply inlet **(30a)** of the hot water storage tank **(11)** while the hot water supply pipe **(37)** is connected to the hot water supply outlet **(37a)** thereof.

The user side circuit **(39)** is composed of the hot water circuit **(32)** and a circulation water circuit **(34).** The hot water storage tank **(11)** includes a high-temperature water outlet **(32a)** and a hot water return port **(32b).** The high-temperature water outlet **(32a)** is formed at the upper part of the side face of the hot water storage tank **(11)** while the hot water return port **(32b)** is formed at the lower part of the side face thereof.

The hot water circuit **(32)** is connected to the high-temperature water outlet **(32a)** and the hot water return port **(32b)** of the hot water storage tank **(11)** to form a primary side circuit connected to the upper part and the lower part of the hot water storage tank **(11).** The hot water circuit **(32)** includes an intermediate heat exchanger **(33)** and a pump **(35).** The intermediate heat exchanger **(33)** is composed of a generally-called plate type heat exchanger and includes a plurality of first flow paths **(32a)** and a plurality of second flow paths **(32b)** partitioned from each other. The high-temperature water outlet **(32a)** of the hot water storage tank **(11)** is connected to one end of each first flow path **(33a)** of the intermediate heat exchanger **(33),** and the other end of each first flow path **(33a)** is connected to the hot water return port **(32b)** via the pump **(35).**

The circulation water circuit **(34)** is a heating medium circuit in which water is filled as a heating medium, is connected at both ends of each second flow path **(33b)** of the intermediate heat exchanger **(33),** and includes a heating radiator section **(38)** and a pump **(36).** Specifically, one end of the heating radiator section **(38)** of the circulation water circuit **(34)** is connected to one end of each second flow path **(33b)** of the intermediate heat exchanger **(33),** and the other end of the heating radiator section **(38)** is connected to the other end of the intermediate heat exchanger **(33)** via the pump **(36).** In other words, the circulation water circuit **(34)** composes a secondary side circuit that supplies from the hot water storage tank **(11)** to the user side the water heat exchanged in the intermediate heat exchanger **(11)** with the high-temperature water flowing in the hot water circuit **(32).** Heating targets of the heating radiator **(38)** are floor heating and bath tub water reheating, for example, but the kinds and the number of the heating targets are not limited specifically.

Description will be given next about to the auxiliary evaporator **(23),** which provides the feature of present invention, and the cooling circuit **(15)** connected the hot water storage tank **(11).**

The auxiliary evaporator **(23)** is a generally-called plate type heat exchanger and includes a plurality of first flow paths **(23a)** and a plurality of second flow paths **(23b)** partitioned from each other. One end of each first flow path **(23a)** of the auxiliary evaporator **(23)** is connected to the evaporator **(22)** via the solenoid valve **(27a)** while the other end of each first flow path **(23a)** is connected to the suction side of the compressor **(25).** The solenoid valve **(27a)** is capable of being opened and closed.

The cooling circuit **(15)** is arranged astride the heat source unit **(3)** and the hot water storage unit **(2).** The hot water storage tank **(11)** includes a middle-temperature water outlet **(15a)** and a low-temperature water return port **(15b),** wherein the middle-temperature water outlet **(15a)** is formed at the lower part of the side face of the hot water storage tank **(11)** while the low-temperature water return port **(15b)** is formed at the bottom thereof. The cooling circuit **(15)** is connected to the middle-temperature water outlet **(15a)** and the low-temperature return port **(15b)** of the hot water storage tank **(11)** and includes a pump **(18).**

Specifically, in the cooling circuit **(15),** the middle-temperature water outlet **(15a)** of the hot water storage tank **(11)** is connected to one end of each second flow path **(23b)** of the auxiliary evaporator **(23),** and the other end of each second flow path **(23b)** is connected to the low-temperature water return port **(15b)** of the hot water storage tank **(11)** via the pump **(18).** Each position and each height of the middle-temperature water outlet **(15a)** and the low-temperature water return port **(15b)** in the hot water storage tank **(11)** are not limited specifically only when they are located at the lower part of the hot water storage tank **(11).** Wherein, the middle-temperature water outlet **(15a)** is preferably formed at a part higher in level than the low-temperature water return port **(15b).**

In the refrigerant circuit **(20),** a bypass circuit **(28)** is provided which connects the upstream side of the solenoid valve **(27b)** and the downstream side of the auxiliary evaporator **(23).** A bypass valve **(27a)** is provided in the bypass circuit **(28).** The bypass circuit **(28)** allows the evaporator **(22)** to be connected to the suction side of the compressor **(25)** with the auxiliary evaporator **(23)** bypassed. The bypass valve **(27a)** is capable of being opened and closed.

The controller **(50)** is operation means for operating the hot water supply device **(1)** and includes a flow path switching section **(51)** and a defrosting operation section **(52).**

The flow path switching section **(51)** composes switching means for switching the refrigerant circuit **(20)** so that all the refrigerant flowing out from the evaporator **(22)** flows into one of the auxiliary evaporator **(23)** and the bypass circuit **(28)** according to the temperature of the refrigerant flowing out from the evaporator **(22)** of the refrigerant circuit **(20).**

The defrosting operation section **(53)** composes defrosting operation means for defrosting the evaporator **(22)** with the use of the heat of the storage water obtained in the auxiliary evaporator **(23).**

Though not shown, a temperature sensor for measuring the temperature of the refrigerant is provided in the vicinity of the refrigerant outlet of the evaporator **(22).**

### -Driving Operation-

The hot water supply device **(1)** performs a hot water supply operation, a user side operation, and a defrosting operation.

The hot water supply operation is an operation for accumulating heat in the hot water storage tank **(11).** The user side operation is an operation for supplying the heat accumulated in the hot water storage tank **(11)** to the user side. The defrosting operation is a defrosting operation for defrosting the evaporator **(22)** to which frost adheres in the refrigerant circuit **(20).** Each of the three operations will be described below in order.

### <Hot water supply operation>

The hot water supply operation that the hot water supply device **(1)** performs will be descried first.

When the compressor **(25)** is operated, the refrigerant in the refrigerant circuit **(20)** circulates to perform the vapor compression refrigeration cycle. In the refrigerant circuit **(20),** a refrigeration cycle including a supercritical state region is performed.

The flow path switching section **(51)** switches the refrigerant circuit **(20)** between a first operation and a second operation. The first operation is performed to allow the refrigerant flowing out from the evaporator **(22)** to flow into the auxiliary evaporator **(23)** when the temperature of the refrigerant flowing out from the evaporator **(22)** is equal to or higher than a predetermined temperature (0°C, for example). On the other hand, the second operation is performed to allow the refrigerant flowing out from the evaporator **(22)** to flow into the bypass circuit when the temperature of the refrigerant flowing out from the evaporator **(22)** is lower than the predetermined temperature.

Specifically, in the first operation, the bypass valve **(27a)** is closed fully while the solenoid valve **(27b)** is opened fully by the flow path switching section **(51).** Accordingly, in the refrigerant circuit **(20),** the refrigerant discharged from the compressor **(25)** flows into the first flow paths **(21a)** of the radiator **(21)** to radiate heat to the storage water flowing in the second flow paths **(21b).** The refrigerant having radiated the heat in the radiator **(21)** is reduced in pressure when passing through the motor-operated expansion valve **(26),** flows into the evaporator **(22),** and then absorbs heat from the outdoor air. The refrigerant flowing out from the evaporator **(22)** flows into the first flow paths **(23a)** of the auxiliary evaporator **(23)** and absorbs heat from the middle-temperature water flowing in the second flow paths **(23b),** which will be described later, thereby being evaporated. The refrigerant is thus evaporated step by step in the evaporator **(22)** and the auxiliary evaporator **(23)** and is then sucked into the compressor **(25).** In this way, the refrigerant circuit **(20)** serves as a heat pump using the outdoor air and the middle-temperature water flowing in the second flow paths **(23b)** of the auxiliary evaporator **(23)** as heat sources in the first operation.

In contrast, in the second operation, the bypass valve **(27a)** is opened fully while the solenoid valve **(27b)** is closed fully by the flow path switching section **(51).** Accordingly, all the refrigerant flowing in the evaporator **(22)** flows into the bypass circuit **(28).** In other words, no refrigerant flows into the first flow paths **(23a)** of the auxiliary evaporator **(23)** in the refrigerant circuit **(20).** Thus, the refrigerant circuit **(20)** serves as a heat pump using only the outdoor air as a heat source in the second operation.

The temperature of the refrigerant flowing out from the evaporator **(22)** receives influence from the outdoor air temperature with which the refrigerant heat exchanges in the evaporator **(22).** Therefore, the flow path of the refrigerant circuit may be switched according to the outdoor air temperature with the correlation examined in advance between the temperature of the refrigerant flowing out from the evaporator **(22)** and the outdoor air temperature.

In the hot water storage tank **(11),** low-temperature water is supplied from the water supply inlet **(30a)** at the bottom of the hot water storage tank **(11)** through the water supply pipe **(30)** to be retain in the bottom of the hot water storage tank **(11).** When the pump **(12)** provided at the extraction pipe **(13)** to the hot water storage tank **(11)** starts operating, the low-temperature water retained in the bottom of the hot water storage tank **(11)** flows out into the extraction pipe **(13)** from the extraction port **(13a).** Then, the low-temperature water flows through the extraction pipe **(13),** flows into the second flow paths **(21b)** of the radiator **(21),** and is heated by the refrigerant flowing in the first flow paths **(21a)** thereof to be high-temperature water. The high-temperature water flows into the return pipe **(14)** to be returned into the hot water storage tank **(11)** from the return port **(14a)** of the hot water storage tank **(11).** In this way, the high-temperature water is retained in the upper part of the hot water storage tank **(11).** The temperature of the high-temperature water is in the range between 60 and 90 °C, for example, but is not limited specifically.

From the lower part to the upper part of the hot water storage tank **(11)** in the hot water storage tank **(11),** a high-temperature water layer, a middle-temperature water layer, and a low-temperature water layer of the storage water are formed due to supply of the low-temperature water to the bottom thereof from the water supply pipe **(30),** flowing in of the high-temperature water from the upper part of the side face thereof through the return pipe **(14),** and difference in water density caused due to temperature difference of the water. The middle-temperature layer is a layer of middle-temperature water in the range between 30 and 40 °C, which can be utilized for neither hot water supply nor heating and is located from a part slightly lower in level than the middle part to the lower part of the hot water storage tank **(11).** The temperature and the location, however, are not limited specifically. The high-temperature water layer is a layer of high-temperature water of which temperature is higher than that of the middle-temperature water, and the low-temperature water layer is a layer of water of which temperature is lower than that of the middle-temperature water.

In the cooling circuit **(15),** when the pump **(18)** is operated, the middle-temperature water retained in the middle-temperature water layer in the hot water storage tank **(11)** flows out from the middle-temperature water outlet **(15a)** at the lower part of the side face of the hot water storage tank **(11)** into the second flow paths **(23b)** of the auxiliary evaporator **(23).** The middle-temperature water is cooled by the refrigerant flowing in the first flow paths **(23a)** to be the low-temperature water. The low-temperature water flows into the hot water storage tank **(11)** from the low-temperature water return port **(15b)** of the hot water storage tank **(11).** Accordingly, in the hot water storage tank **(11),** the middle-temperature water reduces while the low-temperature water is retained in the bottom thereof.

In the second operation of the refrigerant circuit **(20),** since no refrigerant flows in the first flow paths **(23a)** of the auxiliary evaporator **(23),** the pump **(18)** of the cooling circuit **(15)** may be stopped.

### <User Side Operation>

The user side operation of the hot water supply device **(1)** will be described next.

In the user side operation, two operations are performed, wherein one of the operations is an operation for supplying the high-temperature water in the hot water supply storage tank **(11)** directly to the user side while the other operation is an operation for supplying the heat of the high-temperature water in the hot water storage tank **(11)** indirectly to a heating target.

In the operation for supplying the high-temperature water directly to the user side, the high-temperature water flows through the hot water supply pipe **(37)** from the hot water supply outlet **(37a)** of the hot water storage tank **(11)** to be supplied to the user side.

The operation for supplying the heat to the heating target is performed in the user side circuit **(39).** Specifically: when the pump **(35)** of the hot water circuit **(32)** is operated, the high-temperature water flows out from the high-temperature water outlet **(32a)** of the hot water storage tank **(11)** into the first flow paths **(33a)** of the intermediate heat exchanger **(33);** the high-temperature water flows in the first flow paths **(33a)** of the intermediate heat exchanger **(33)** to radiate heat to circulation water flowing in the second flow paths **(33b),** thereby being cooled; and then, the cooled water is returned into the hot water storage tank **(11)** from the hot water return port **(32b)** of the hot water storage tank **(11).**

In the circulation water circuit **(34),** when the pump **(36)** is operated, the circulation water circulates. Specifically, in the circulation water circuit **(34),** the circulation water flows out from one end of each second flow path **(33b)** of the intermediate heat exchanger **(33)** and radiates heat in the heating radiator section **(38)** to lower the temperature of itself. The circulation water of which temperature is thus lowered flows into the second flow paths **(33b)** from the other end of the intermediate heat exchanger **(33)** to be heated by the high-temperature water flowing in the first flow paths **(33a).** Thereafter, the thus heated circulation water flows into the heating radiator section **(38)** again to repeat the circulation.

In the case where the heating target of the heating radiator section **(38)** has a comparatively low load, namely, is floor heating, bath tub water reheating, or the like, the circulation water less radiates in the heating radiator section **(38)** to be less cooled. Accordingly, the circulation water of which temperature is less lowered flows into the second flow paths **(33b)** of the intermediate heat exchanger **(33).** As a result, the high-temperature water in the hot water circuit **(32)** is insufficiently cooled even though it radiates heat to the circulation water in the intermediate heat exchanger **(33),** so that it becomes the middle-temperature water of which temperature is less lowered and flows into the hot water storage tank **(11).** Thus, the middle-temperature water in the hot water storage tank **(11)** increases.

### <Defrosting Operation>

The defrosting operation that the defrosting operation section **(52)** performs in the refrigerant circuit **(20)** will be described next.

In the case where the outdoor air is low temperature, if the hot water supply operation by the refrigerant circuit **(20)** is continued, frost adheres to the evaporator **(22)** to inhibit heat exchange between the refrigerant and the outdoor air. For tackling this problem, the defrosting operation is performed, for example, every predetermined time period in the hot water supply device **(1).**

In the defrosting operation, the pump **(12)** of the extraction pipe **(13)** is stopped operating so that the storage water in the extraction pipe **(13),** the second flow paths **(21b)** of the radiator **(21),** and the return pipe **(14)** stops flowing. The pump **(18)** of the cooling circuit **(15)** is operated so that the storage water flows in the cooling circuit **(15).**

In the refrigerant circuit **(20),** when the defrosting operation starts, the bypass valve **(27a)** is closed fully while the solenoid valve **(27b)** and the motor-operated expansion valve **(26)** are opened fully by the defrosting operation section **(52).** Then, the compressor **(25)** starts operating to circulate the refrigerant in the refrigerant circuit **(20).** The refrigerant flows into the first flow paths **(23a)** of the auxiliary evaporator **(23),** absorbs heat from the middle-temperature water flowing in the second flow paths **(23b)** thereof to be the high-temperature refrigerant, and is then sucked into the compressor **(25)** to be compressed, thereby being higher-temperature refrigerant. Thereafter, the refrigerant flows into the first flow paths **(21a)** of the radiator **(21).** Since the storage water in the second flow paths **(21b)** stops flowing, the refrigerant then flows into the motor-operated expansion valve **(27)** with its temperature maintained high. The refrigerant flowing through the motor-operated expansion valve **(27),** which is opened fully, flows into the evaporator **(22)** with less or no temperature lowering subjected. Thus, the high-temperature refrigerant flows into the evaporator **(22),** so that the refrigerant melts the frost adhering to the evaporator **(22)** to be cooled. Thereafter, the refrigerant flows out from the evaporator **(22)** into the first flow paths **(23a)** of the auxiliary evaporator **(23).**

### -Effects of Embodiment 1-

According to the present embodiment, in the cooling circuit **(15),** the middle-temperature water is taken out from the middle-temperature water outlet **(15a)** at the lower part of the side face of the hot water storage tank **(11),** is cooled in the auxiliary evaporator **(23)** of the refrigerant circuit **(20)** to be the low-temperature water, and is returned to the hot water storage tank **(11)** from the low-temperature water return port **(15b)** at the bottom of the hot water storage tank **(11).** Hence, the middle-temperature water in the hot water storage tank **(11)** reduces definitely, and only the low-temperature water is allowed to be retained in the lower part of the hot water storage tank **(11).** This enables the low-temperature water to be taken out definitely from the extraction port **(13a)** at the bottom of the hot water storage tank **(11)** to the extraction pipe **(13),** so that the low-temperature water can be supplied definitely to the second flow paths **(21b)** of the radiator **(21)** in the refrigerant circuit **(20).** As a result, in the refrigerant circuit **(20),** the refrigerant flowing in the first flow paths **(21a)** of the radiator **(21)** is cooled by the low-temperature water flowing in the second flow paths **(21b)** thereof definitely, thereby preventing the COP of the refrigerant circuit **(20)** from lowering.

Further, carbon dioxide is used as the refrigerant of the refrigerant circuit **(20)** to exhibit the effects of preventing COP lowering more remarkably than the case using another refrigerant, such as fluorocarbon refrigerant.

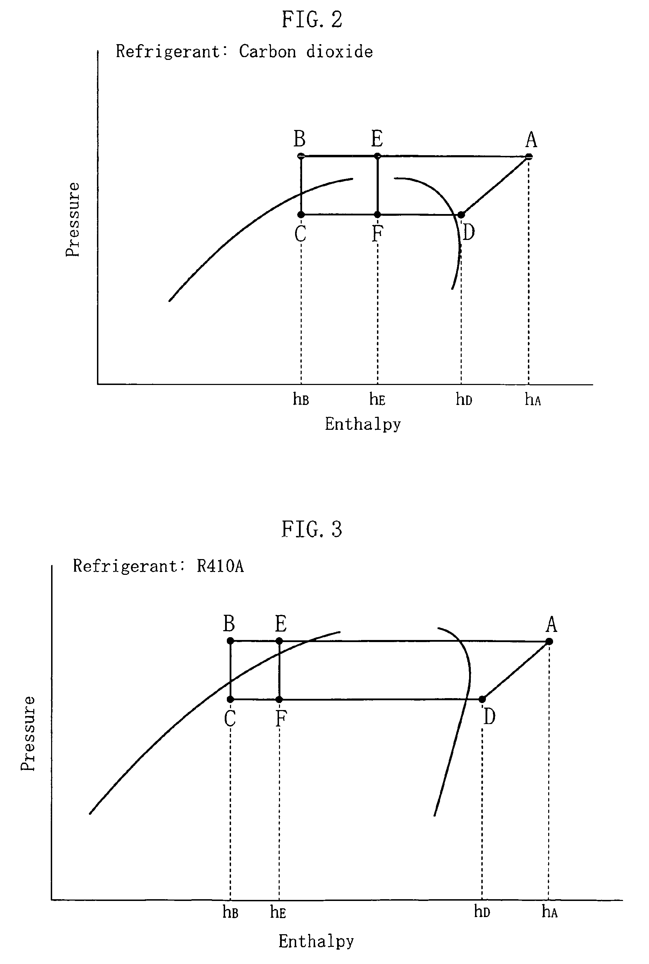

FIG. **2** and FIG. **3** are Mollier diagrams of vapor compression refrigeration cycles using carbon dioxide and R410A, respectively. As shown in FIG. **2** and FIG. **3****,** the refrigerant in the refrigerant circuit **(20)** is compressed up to the point A by the compressor **(25)** and then is cooled up to the point B by the evaporator. Then, the refrigerant reduced in pressure up to the point C is heated up to the point D by the evaporator **(22)** to be returned to the compressor **(25).** While the point B serves as the outlet of the radiator **(21)** in the case of the low-temperature water, the point E serves as it in the case of the middle-temperature water. Accordingly, the refrigerant is reduced in pressure up to the point F, is heated up to the point D by the evaporator **(22),** and is then returned to the compressor **(25).**

COP is a heating capacity of a radiator with respect to compressor input of refrigerant. Accordingly, when supposing that the enthalpies at the points A, B, D, and E are hA, hB, hD, and hE, the COP when the low-temperature water flows in the radiator is expressed by (hA-hB)/(hA-hD), and the COP when the middle-temperature water flows in the radiator is expressed by (hA-hE)/(hA-hD). As shown in FIG. **2** and FIG. **3****,** the heating capacity (hA-hE) in a case of the middle-temperature water is much smaller than the heating capacity (hA-hB) in a case of the low-temperature water when comparing the case using carbon dioxide with the case using R410. Accordingly, when the middle-temperature water flows in the radiator, the COP lowers greatly. This characteristic of carbon dioxide attains further remarkable effects of prevention of COP lowering.

Provision of the auxiliary evaporator **(12)** and utilization of the middle-temperature water in the hot water storage tank **(11)** as a heat source for the auxiliary evaporator **(23)** in the refrigerant circuit **(20)** attain an increase in evaporation capacity in the evaporation process and reduction in size of the evaporator **(22).**

The hot water supply device is so arranged that the bypass circuit **(28)** bypassing the upstream side and the downstream side of the auxiliary evaporator **(23)** of the refrigerant circuit **(20)** and the flow path switching section **(51)** allow all the refrigerant to flow into the bypass circuit **(28)** according to the temperature of the refrigerant flowing out from the evaporator **(22).** Accordingly, when the temperature of the refrigerant flowing out from the evaporator **(22)** is equal to or lower than the predetermined temperature, all the refrigerant flowing out from the evaporator **(22)** flows into the bypass circuit **(28).** This allows the low-temperature refrigerant to flow into the first flow paths **(23a)** of the auxiliary evaporator **(23)** so that the middle-temperature water in the refrigerant circuit **(15)** flowing in the second flow paths **(23b)** thereof is prevented from being cooled excessively and from being frozen.

In addition, the hot water supply device **(1)** is so composed that the defrosting operation section **(52)** performs the defrosting operation in such a manner that the refrigerant flowing in the first flow paths **(23a)** of the auxiliary evaporator **(23)** utilizes the heat obtained from the middle-temperature water flowing in the second flow paths **(23b).** This attains efficient defrosting of the evaporator **(22)** and reduces the middle-temperature water in the hot water storage tank **(11).** Further, there is no need to provide additional defrosting operation means for the evaporator **(22),** leading to cost reduction.

### -Modified Example of Embodiment 1-

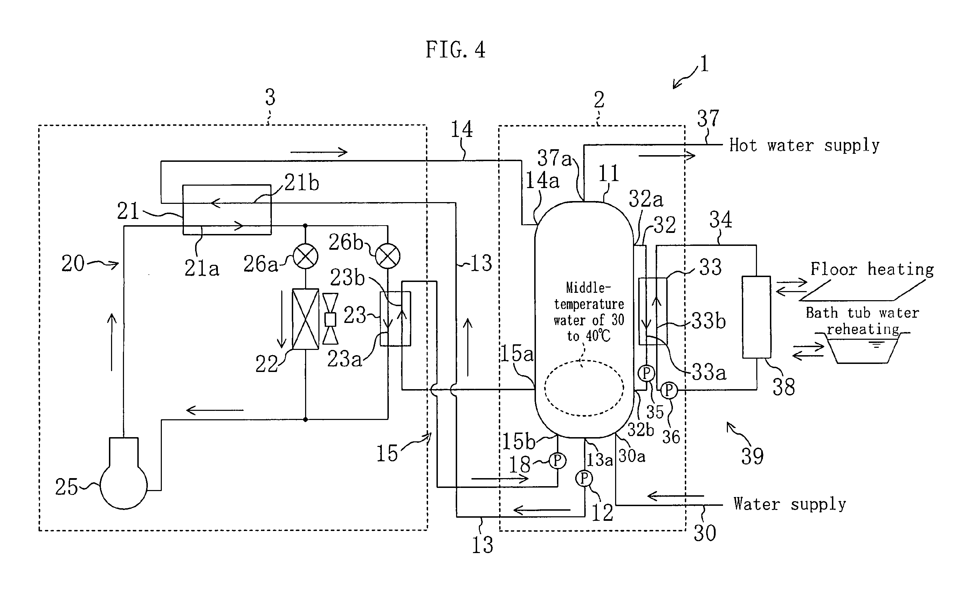

In the present modified example, the evaporator **(22)** and the auxiliary evaporator (23) are connected in parallel to each other in the refrigerant circuit **(20),** as shown in FIG. **4****,** rather than the refrigerant circuit **(20)** in Embodiment 1 in which the auxiliary evaporator **(23)** is connected in series to the downstream side of the evaporator **(23).**

Specifically, in the refrigerant circuit **(20),** the discharge side of the compressor **(25)** is connected to one end of each first flow path **(21a)** of the radiator **(21),** and the other end of each first flow path **(21a)** of the radiator **(21)** branches into two refrigerant flow paths. One of the branching refrigerant flow paths is provided with a first motor-operated expansion valve **(26a)** and the evaporator **(22)** in this order while the other branching refrigerant flow path is provided with a second motor-operated expansion valve **(26b)** and the auxiliary evaporator **(23)** in this order. In other words, the radiator **(21)** is connected to one end of the evaporator **(22)** via the first motor-operated expansion valve **(26a)** and is connected to one end of each first flow path **(23a)** of the auxiliary evaporator **(23)** via the motor-operated expansion valve **(26b).** The other end of the evaporator **(22)** and the other end of each first flow path **(23a)** of the auxiliary evaporator **(23)** interflow to be connected to the suction side of the compressor **(25).**

In the present modified example, as well, the middle-temperature water in the cooling water circuit **(17)** flows into the second flow paths **(23b)** of the auxiliary evaporator **(23).** Accordingly, when the refrigerant flowing in the first flow paths **(23a)** performs heat exchange with the middle-temperature water flowing in the second flow paths **(23b)** of the auxiliary evaporator **(23),** the refrigerant flowing in the first flow paths **(23a)** evaporates while the middle-temperature water flowing in the second flow paths **(23b)** is cooled.

Even if the refrigerant flowing out from the evaporator **(22)** is equal to or lower than the predetermined temperature in the case where the outdoor air temperature is low, parallel connection of the evaporator **(22)** with the auxiliary evaporator **(23)** prevents the refrigerant at the temperature equal to or lower than the predetermined temperature from flowing into the auxiliary evaporator **(23).** This eliminates the need to provide a bypass circuit for preventing the refrigerant from flowing into the auxiliary evaporator **(23).**

Hence, the refrigerant flows in the first flow paths **(23a)** of the auxiliary evaporator **(23)** all the time with no influence of the temperature of the refrigerant flowing out from the evaporator **(22)** received, so that the middle-temperature water flowing in the second flow paths **(23b)** in the cooling circuit **(17)** is cooled all the time. This reduces the middle-temperature water in the hot water storage tank **(11)** definitely to retain only the low-temperature water in the lower part of the hot water storage tank **(11).** As a result, only the low-temperature water flows in the extraction pipe **(13)** connected to the extraction port **(13a)** at the bottom of the hot water storage tank **(11)** to allow the low-temperature water to flow in the second paths **(21b)** in the radiator **(21)** of the refrigerant circuit **(20),** thereby cooling the refrigerant flowing in the first flow paths **(21a).** As a result, the COP of the refrigerant circuit **(20)** is prevented from lowering.

The other construction, operation, and effects are the same as those in Embodiment 1.

### <Embodiment 2>

In Embodiment 1, the middle-temperature water in the hot water storage tank **(11)** is taken out, is cooled in the auxiliary evaporator **(23)** of the refrigerant circuit **(20)** to be the low-temperature water, and is then returned to the bottom of the hot water storage tank **(11).** In contrast to Embodiment 1, the storage water flowing in the extraction pipe **(13)** from the hot water storage tank **(11)** is cooled in the auxiliary evaporator **(23)** of the refrigerant circuit **(20)** and is then supplied to the radiator **(21)** of the refrigerant circuit **(20)** without providing the cooling circuit **(15)** in Embodiment 2.

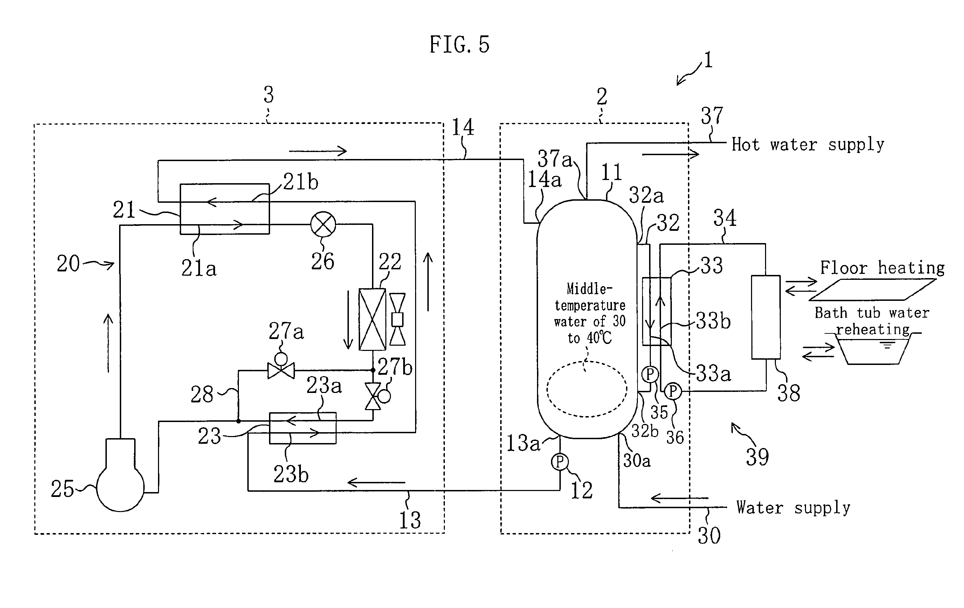

Specifically, as shown in FIG. **5****,** the auxiliary evaporator **(23)** is provided in the middle of the extraction pipe **(13).** The extraction port **(13a)** of the hot water storage tank **(11)** is connected to one end of each second flow path **(23b)** of the auxiliary evaporator **(23)** through the extraction pipe **(13).** The other end of each second flow path **(23b)** is connected one end of each second flow path **(21b)** of the radiator **(21)** through the extraction pipe **(13).** The other end of each second flow path **(21b)** of the radiator **(21)** is connected to the return port **(14a)** of the hot water storage tank **(11)** through the return pipe **(14).**

The storage water in the lower part of the hot water storage tank **(11)** flows out from the extraction port **(13a)** into the extraction pipe **(13)** and flows into the second flow paths **(23b)** of the auxiliary evaporator **(23).** Then, the storage water is cooled by the refrigerant flowing in the first flow paths **(23a)** to be the low-temperature water and is then flow into the second flow paths **(21b)** of the radiator **(21).**

In the radiator **(21),** the low-temperature water is heated by the refrigerant flowing in the first flow paths **(21a)** to be the high-temperature water, so that the refrigerant flowing in the first flow paths **(21a)** is cooled by the low-temperature water flowing in the second flow paths **(21b)** definitely. Then, the high-temperature water flowing out from the second flow paths **(21b)** of the radiator **(21)** flows through the return pipe **(14),** flows into the hot water storage tank **(11)** from the return port **(14a),** and is then retained therein.

In the refrigerant circuit shown in FIG. **5****,** the auxiliary evaporator **(23)** is connected in series to the downstream side of the evaporator **(22)** as in Embodiment 1. The auxiliary evaporator **(23)** may be connected in parallel to the evaporator **(22)** as in the modified example of Embodiment 1.

The other construction, operation, and effects are the same as those in Embodiment 1.

### -Effects of Embodiment 2-

In present embodiment, the storage water flowing in the extraction pipe **(13)** from the extraction port **(13a)** of the hot water storage tank **(11)** flows into the second flow paths **(23b)** of the auxiliary evaporator **(23)** and is cooled by the refrigerant flowing in the first flow paths **(23a)** to be the low-temperature water definitely, so that the low-temperature water can be supplied to the second flow paths **(21b)** of the radiator **(21)** directly. Accordingly, the refrigerant flowing in the first flow paths **(21a)** of the radiator **(21)** is cooled definitely by the low-temperature water flowing in the second flow paths **(21b)** thereof to prevent the COP of the refrigerant circuit **(20)** from lowering.

Further, in present embodiment, the low-temperature water flowing out from the second flow paths **(23b)** of the auxiliary evaporator **(23)** is supplied to the radiator **(21)** directly with no cooling circuit **(17)** provided to thus simplify the process and to lead to cost reduction.

Moreover, the low-temperature water cooled in the auxiliary evaporator **(23)** is not returned to the hot water storage tank **(11)** to invite no mixture of the low-temperature water with the middle-temperature water in the hot water storage tank **(11).** This permits the definitely cooled storage water to flow into the radiator **(21)** to prevent definitely the COP of the refrigerant circuit **(20)** from lowering.

### <Embodiment 3>

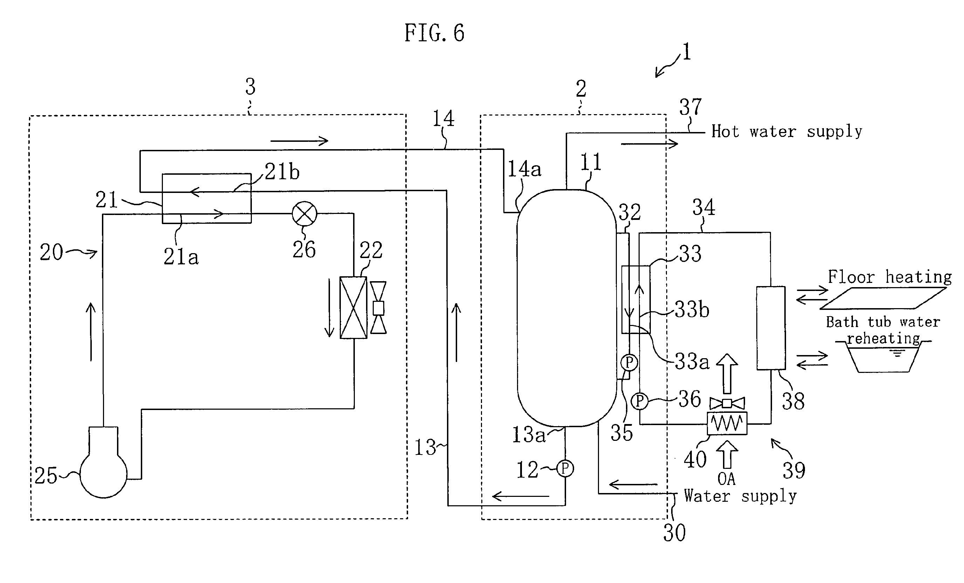

In the present embodiment, as shown in FIG. **6****,** a ventilation heat exchanger **(40)** is provide upstream of the intermediate heat exchanger **(33)** in the circulation water circuit **(34)** of the user side circuit **(39)** without providing the auxiliary evaporator **(23)** in the refrigerant circuit **(20)** rather than Embodiment 1 in which the storage water in the hot water storage tank **(11)** is cooled in the auxiliary evaporator **(23)** of the refrigerant circuit **(20)** for supplying the low-temperature storage water to the radiator **(21).** The ventilation heat exchanger **(40)** heats the outdoor air (OA) supplied indoors and serves as cooling means for allowing the outdoor air (OA) to cool the circulation water.

Specifically, in the circulation water circuit **(34),** the ventilation heat exchanger **(40)** is provided upstream of the intermediate heat exchanger **(33).** The circulation water having radiated heat in the heater radiator **(38)** flows in the ventilation heat exchanger **(40)** and flows then into the second flow paths **(33b)** of the intermediate heat exchanger **(33)** via the pump **(36).**

With the above construction, even in the case where the circulation water radiates heat insufficiently in the heating radiator section **(38)** because the heating target has a comparatively low load, namely, is floor heating, bath tub water reheating, or the like, the circulation water is cooled by the outdoor air (OA) taken indoors when flowing in the ventilation heat exchanger **(40)** to be the low-temperature circulation water. The low-temperature circulation water flows into the second flow paths **(33b)** of the intermediate heat exchanger **(33),** is heated by the high-temperature water flowing in the first flow paths **(33a)** thereof, and is then sent to the heating radiator section **(38).**

On the other hand, in the hot water circuit **(32),** the high-temperature water flows in the first flow paths **(33a)** of the intermediate heat exchanger **(33)** to be cooled by the circulation water flowing in the second flow paths **(33b)** thereof. Then, in the present embodiment, the circulation water flowing in the second flow paths **(33b)** flows and is cooled in the ventilation heat exchanger **(40)** to be the low-temperature circulation water. Thus, the high-temperature water flowing in the first flow paths **(33b)** becomes sufficiently cooled low-temperature water. This low-temperature water flows into the hot water storage tank **(11)** from the hot water return port **(32b)** of the hot water storage tank **(11)** to be retained in the lower part of the hot water storage tank **(11).**

In the present embodiment, the low-temperature water flows into the hot water storage tank **(11)** with no middle-temperature water flowing from the hot water circuit **(33)** through the hot water return port **(32b)** of the hot water storage tank **(11),** which eliminates the need to provide the auxiliary evaporator **(23)** in the refrigerant circuit **(20).** Nevertheless, the high-temperature water layer, the middle-temperature water layer, and the low-temperature water layer are formed in the hot water storage tank **(11)** due to difference in water density caused by temperature difference of the water and due to water supply from the lower part and supply of the high-temperature water from the upper part. In order to take out and cool the middle-temperature water, the auxiliary evaporator **(23)** may be provided in the refrigerant circuit **(20).**

### -Effects of Embodiment 3-

In the present embodiment, the ventilation heat exchanger **(40b)** is provided upstream of the intermediate heat exchanger **(33)** in the circulation water circuit **(34).** Accordingly, even if the circulation water radiates heat insufficiently in the heating radiator **(38),** the outdoor air (OA) taken indoors cools the circulation water in the ventilation heat exchanger **(40)** to allow the circulation water to be the low-temperature. Accordingly, the high-temperature water in the hot water circuit **(32)** is cooled sufficiently by the low-temperature circulation water flowing in the second flow paths **(33b)** of the intermediate heat exchanger **(33)** when passing through the first flow paths **(33a)** thereof. Hence, the low-temperature water can be returned through the hot water return port **(32b)** at the lower part of the side face of the hot water storage tank **(11)** from the hot water circuit **(32),** thereby retaining the low-temperature water in the lower part of the hot water storage tank **(11).** As a result, the low-temperature water flows out into the extraction pipe **(13)** from the extraction port **(13a)** at the bottom of the hot water storage tank **(11)** while the low-temperature water flows in the second flow paths **(21b)** of the radiator **(21)** in the refrigerant circuit **(20).** This low-temperature water cools the refrigerant flowing in the first flow paths **(21a)** sufficiently to prevent the COP of the refrigerant circuit **(20)** from lowering.

Furthermore, in the ventilation heat exchanger **(40)** of the circulation water circuit **(34),** the warm-up of the circulation water having radiated heat in the heating heat exchanger **(38)** is utilized for heating the outdoor air (OA) for ventilation, thereby eliminating the need to provide an additional heat source for heating the outdoor air (OA) for ventilation to thus lead to cost reduction.

The other construction, operation, and effects are the same as those in Embodiment 1.

### <Other Embodiments>

The above embodiments may have any of the following constructions.

Carbon dioxide is filed as the refrigerant of the refrigerant circuit **(20)** in Embodiment 1, but refrigerant other than carbon dioxide may be filled in the first, second, and seventh aspects of the present invention. Even in these cases, the COP of the refrigerant circuit in the vapor compression refrigeration cycle can be prevented from lowering.

In the cooling circuit **(15)** in Embodiment 1, the middle-temperature water in the hot water storage tank **(11)** is taken out and is returned to the hot water storage tank **(11)** as the low-temperature water cooled in the auxiliary evaporator **(23).** Wherein, the temperature of the middle-temperature water taken out to the cooling circuit **(15)** is not limited thereto specifically, and the low-temperature water may be taken out. In the case where the low-temperature water is taken out to the cooling circuit **(15),** the water is further cooled in the auxiliary evaporator **(23)** to be water further lowered in temperature.

In Embodiment 1, the bypass circuit **(28)** and the flow path switching section **(51)** are provided so that all the refrigerant flows into the bypass circuit **(28)** according to the temperature of the refrigerant flowing out from the evaporator **(22).** In the first aspect of the present invention, the refrigerant flowing in the evaporator **(22)** may flow all the time into the auxiliary evaporator **(23)** without providing the bypass circuit **(28)** and the flow path switching section **(51).** Further, the defrosting operation section **(52)** is provided for performing the defrosting operation, but the refrigerant circuit **(20)** may perform the vapor compression refrigeration cycle all the time without providing the defrosting operation section **(52)** in the first aspect of the present invention.

The floor heating and bath tub water reheating are referred to as examples of the heating targets of the heating radiator **(38)** in the circulation water circuit **(34)** of the user side circuit **(39),** but the heating targets are not limited thereto. The cooling means of the circulation water circuit **(34)** is not limited to the ventilation heat exchanger **(40)** but may be an indoor air conditioner that performs no ventilation, for example.

The constructions of the refrigerant circuit **(20)** and the hot water storage tank **(11)** of the hot water supply device **(1)** in Embodiment 1 is not limited specifically. The refrigerant circuit **(20)** is required only to be a refrigerant circuit of the vapor compression refrigeration cycle. The radiator **(21)** and the auxiliary evaporator **(23)** may not be plate type heat exchangers only if they can perform heat exchange between the refrigerant and the storage water. As well, the evaporator **(22)** may not be a fin and tube heat exchanger.

The extraction pipe **(13)** connected to the hot water storage tank **(11)** is required only to be connected to the lower part of the hot water storage tank **(11)** while the return pipe **(14)** is required only to be connected to the upper part of the hot water storage tank **(11),** and thus, the connection points thereof are not limited specifically. As well, the connection point of the hot water circuit **(32)** connected to the hot water storage tank **(11)** is not limited specifically in Embodiments 1 and 2. Further, the hot water circuit **(32)** may not be connected to the hot water storage tank **(11)** with no user side circuit **(39)** provided in Embodiment 1.

It should be noted that the above embodiments are mere essentially preferred examples and do not intend to limit the scopes of the present invention, applicable subjects, and use.

### Industrial Applicability

As describe above, the present invention is useful in hot water supply devices including a refrigerant circuit of a vapor compression refrigeration cycle and a hot water storage tank.

## Claims

1. A hot water supply device comprising:
a refrigerant circuit **(20)** of a vapor compression refrigeration cycle including a radiator **(21)** and an evaporator **(22);**
a hot water storage tank **(11)** for storing high-temperature water heated in the radiator **(21),** the hot water storage tank **(11)** including a lower part connected to the radiator **(21)** through an extraction pipe **(13)** and an upper part connected to the radiator **(21)** through a return pipe **(14),** the hot water supply device supplying heat accumulated in the hot water storage tank **(11)** to a user side;
an auxiliary evaporator **(23)** provided in the refrigerant circuit **(20);** and
a cooling circuit **(15)** connected to the lower part of the hot water storage tank **(11)** for allowing storage water in the lower part of the hot water storage tank **(11)** to be cooled in the auxiliary evaporator **(23)** and returning it to the lower part of the hot water storage tank **(11).**

2. A hot water supply device comprising:
a refrigerant circuit **(20)** of a vapor compression refrigeration cycle including a radiator **(21)** and an evaporator **(22);**
a hot water storage tank **(11)** for storing high-temperature water heated in the radiator **(21),** the hot water storage tank **(11)** including a lower part connected to the radiator **(21)** through an extraction pipe **(13)** and an upper part connected to the radiator **(21)** through a return pipe **(14),** the hot water supply device supplying heat accumulated in the hot water storage tank **(11)** to a user side; and
an auxiliary evaporator **(23)** provided in the refrigerant circuit **(20)** for cooling storage water flowing into the extraction pipe **(13)** from the hot water storage tank **(11).**

3. The hot water supply device of Claim 1,
wherein the auxiliary evaporator **(23)** is connected in series to the evaporator **(22)** and is arranged downstream of the evaporator **(22).**

4. The hot water supply device of Claim 3,
wherein the refrigerant circuit **(20)** includes:
a bypass circuit **(28)** connected to an upstream side and a downstream side of the auxiliary evaporator **(23);** and
switching means **(51)** for switching the refrigerant circuit **(20)** so as to allow all refrigerant flowing out from the evaporator **(22)** to flow into the bypass circuit **(28)** according to the temperature of the refrigerant flowing out from the evaporator **(22).**

5. The hot water supply device of Claim 1,
wherein the auxiliary evaporator **(23)** is connected in parallel to the evaporator **(22).**

6. The hot water supply device of Claim 1, further comprising:
defrosting operation means **(52)** for defrosting the evaporator **(22)** with the use of heat of the storage water obtained in the auxiliary evaporator **(23).**

7. The hot water supply device of Claim 1,
wherein the refrigerant of the refrigerant circuit **(20)** is carbon dioxide.

8. The hot water supply device of Claim 2,
wherein the auxiliary evaporator **(23)** is connected in series to the evaporator **(22)** and is arranged downstream of the evaporator **(22).**

9. The hot water supply device of Claim 8,
wherein the refrigerant circuit **(20)** includes:
a bypass circuit connected to an upstream side and a downstream side of the auxiliary evaporator **(23);** and
switching means **(51)** for switching the refrigerant circuit **(20)** so as to allow all refrigerant flowing out from the evaporator **(22)** to flow into the bypass circuit **(28)** according to the temperature of the refrigerant flowing out from the evaporator **(22).**

10. The hot water supply device of Claim 2,
wherein the auxiliary evaporator **(23)** is connected in parallel to the evaporator **(22).**

11. The hot water supply device of Claim 2, further comprising:
defrosting operation means **(52)** for defrosting the evaporator **(22)** with the use of heat of the storage water obtained in the auxiliary evaporator **(23).**

12. The hot water supply device of Claim 2,
wherein refrigerant of the refrigerant circuit **(20)** is carbon dioxide.

13. A hot water supply device comprising:
a refrigerant circuit **(20)** of a vapor compression refrigeration cycle including a radiator **(21)** and an evaporator **(22);**
a hot water storage tank **(11)** for storing high-temperature water heated in the radiator **(21),** the hot water storage tank **(11)** including a lower part connected to the radiator **(21)** through an extraction pipe **(13)** and an upper part connected to the radiator **(21)** through a return pipe **(14);** and
a user side circuit **(39)** including:
a primary side circuit **(32)** connected to the upper part and the lower part of the hot water storage tank **(11);**
an intermediate heat exchanger **(33)** connected to the primary side circuit **(32); and**
a secondary side circuit **(34)** which is connected to the intermediate heat exchanger **(33),** in which a heating medium circulates, and which supplies the heating medium heat exchanged with the high-temperature water of the hot water storage tank to a user side,
wherein the secondary side circuit **(34)** of the user side circuit **(39)** includes cooling means **(40)** provided upstream of the intermediate heat exchanger **(33)** for cooling the heating medium.

14. The hot water supply device of Claim 13,
wherein the cooling means **(40)** is a ventilation heat exchanger **(40)** for heating outdoor air (OA) supplied indoors.

15. The hot water supply device of Claim 13,
wherein refrigerant of the refrigerant circuit **(20)** is carbon dioxide.
